# EUROPEAN PATENT APPLICATION

(11) **EP 4 321 488 A1**
(43) Date of publication of application: **14.02.2024**
(21) Application number: 22784460.2
(22) Date of filing: 17.03.2022
(51) Int. Cl.: C02F 1/469, B01D 61/54

(54) **ELECTRODEIONIZATION SYSTEM AND CONTROL METHOD FOR ELECTRODEIONIZATION SYSTEM**

(30) Priority: 07.04.2021 JP 2021065340
(71) Applicant: Kurita Water Industries Ltd., Tokyo 164-0001 (JP)
(72) Inventor: MINATO Yasuharu, Tokyo 164-0001 (JP); TABEI Rena, Tokyo 164-0001 (JP)
(74) Representative: Kuhnen & Wacker Patent- und Rechtsanwaltsbüro PartG mbB
(86) International application number: PCT/JP2022/012163
(87) International publication number: WO 2022/215475

(57) **Abstract**

The present invention provides an electrodeionization system (1) comprising a plurality of electrodeionization devices (1A) installed in parallel and also provides a control method therefor. The electrodeionization system (1) comprises: a supply water flow rate varying means that varies a flow rate of supply water to the plurality of electrodeionization devices (1A); a concentrated water flow rate adjusting means that adjusts, for each electrodeionization device (1A), a flow rate of concentrated water (W4) discharged from each of the plurality of electrodeionization devices (1A); and a concentrated water flow rate maintaining means that maintains the flow rate of concentrated water (W4) discharged from each of the plurality of electrodeionization devices (1A) at a certain level or higher. The concentrated water flow rate maintaining means is installed only in a main flow path (23) in which a plurality of sub-flow paths (22) are integrated and a main path (25) in which a plurality of sub-paths (24) are integrated. Desalted water (W2) produced in each of the plurality of electrodeionization devices (1A) flows through each of the plurality of sub-flow paths (22) while concentrated water (W4) discharged from each of the plurality of electrodeionization devices (1A) flows through each of the plurality of sub-paths (24). According to the present invention, it is possible to provide an electrodeionization system that reduces the production cost while suppressing the occurrence of scale due to a decrease in the flow rate of supply water to each electrodeionization device and a control method therefor.

## Description

### [Technical Field]

The present invention relates to an electrodeionization system in which a plurality of electrodeionization devices are provided and relates also to a control method for the electrodeionization system.

### [Background Art]

Ultrapure water used in the electronic industry fields such as a semiconductor field is produced by processing raw water with an ultrapure water production apparatus composed of a pretreatment system, a primary pure water system, and a subsystem that processes the primary pure water.

The primary pure water production device included in such an ultrapure water production apparatus is a highly versatile system that is used in various fields such as those for pharmaceuticals and foods in addition to the field of ultrapure water production apparatuses. The configuration of the primary pure water system is generally a two-stage configuration composed of a reverse osmosis membrane (RO membrane) device and an electrodeionization device. The reverse osmosis membrane (RO membrane) device removes silica and salts and also removes ionic and colloidal TOC.

Here, the electrodeionization device generally has a configuration in which cation exchange membranes and anion exchange membranes are alternately arranged between a cathode and an anode to alternately form desalting chambers and concentrating chambers and the desalting chambers are filled with ion exchange resin, and performs removal of various inorganic or organic anions and cations.

When water is supplied to the desalting chambers of the electrodeionization device, ions in the water migrate in the desalting chambers toward the ion exchange resin of either the anode or the cathode due to the electrical charge possessed by the ions. The migrated ions pass through the ion exchange resin and enter the concentrating chambers, so highly desalted pure water is produced in the desalting chambers. On the other hand, ions migrated to the concentrating chambers stay there and are finally discharged as concentrated water.

The electrodeionization device is often used as one of a plurality of electrodeionization devices that are installed in parallel in an electrodeionization system, such as when the amount of water to be treated is large. In such an electrodeionization system, conditions of water supply to the electrodeionization system are often changed to follow the conditions of other systems that are combined before and after that system. For example, in an electrodeionization system used in the primary pure water system of an ultrapure water production apparatus, the flow rate of supply water to the electrodeionization system is increased or decreased depending on the amount of pure water used in the combined subsystem thereby to control the amount of primary pure water produced.

### [Summary of the Invention]

### [Problems to be solved by the Invention]

Unfortunately, when the flow rate of supply water is decreased during operation of the electrodeionization system, there is a problem in that scale may occur due to excessive concentration of the concentrated water in each of the plurality of electrodeionization devices installed.

The present invention has been made in view of the above problem, and an object of the present invention is to provide an electrodeionization system that reduces the production cost while suppressing the occurrence of scale due to a decrease in the flow rate of supply water to each electrodeionization device.

### [Means for solving the Problems]

In view of the above object, first, the present invention provides an electrodeionization system comprising a plurality of electrodeionization devices installed in parallel, the electrodeionization system comprising: a supply water flow rate varying means that varies a flow rate of supply water to the plurality of electrodeionization devices; a concentrated water flow rate adjusting means that adjusts, for each electrodeionization device, a flow rate of concentrated water discharged from each of the plurality of electrodeionization devices; and a concentrated water flow rate maintaining means that maintains the flow rate of the concentrated water discharged from each of the plurality of electrodeionization devices at a certain level or higher, wherein the concentrated water flow rate maintaining means is installed only in a main flow path in which a plurality of sub-flow paths are integrated and a main path in which a plurality of sub-paths are integrated, wherein desalted water produced in each of the plurality of electrodeionization devices flows through each of the plurality of sub-flow paths while concentrated water discharged from each of the plurality of electrodeionization devices flows through each of the plurality of sub-paths (Invention 1).

According to the invention (Invention 1), even when the flow rate of supply water to the plurality of electrodeionization devices (also simply referred to as the flow rate of supply water) is varied, the flow rate of concentrated water discharged from each electrodeionization device (also simply referred to as the flow rate of concentrated water) can be kept constant thereby to suppress the occurrence of scale. Moreover, even when the concentrated water flow rate maintaining means is not provided in each of the sub-flow paths or sub-paths, the flow rate of concentrated water can be kept constant, provided that the concentrated water flow rate maintaining means is provided only in each of the main flow path for desalted water and the main path for concentrated water, and it is therefore possible to reduce the production cost of the electrodeionization system.

In the above invention (Invention 1), the supply water flow rate varying means may increase or decrease the flow rate of supply water within a range of 30% to 100% (Invention 2) .

In the above invention (Invention 1 or 2), the concentrated water flow rate maintaining means may include a first control valve provided in the main flow path and a second control valve provided in the main path (Invention 3) .

In the above invention (Invention 1 to 3), the concentrated water flow rate adjusting means may be a manual valve provided in each of the sub-paths (Invention 4).

Second, the present invention provides a control method for an electrodeionization system comprising a plurality of electrodeionization devices installed in parallel, the control method comprising: a supply water flow rate varying step of varying a flow rate of supply water to the plurality of electrodeionization devices; a concentrated water flow rate adjusting step of adjusting, for each electrodeionization device, a flow rate of concentrated water discharged from each of the plurality of electrodeionization devices; and a concentrated water flow rate maintaining step of maintaining the flow rate of the concentrated water discharged from each of the plurality of electrodeionization devices at a certain level or higher using a first control valve and a second control valve, wherein the first control valve is provided only in a main flow path in which a plurality of sub-flow paths are integrated while the second control valve is provided only in a main path in which a plurality of sub-paths are integrated, wherein desalted water produced in each of the plurality of electrodeionization devices flows through each of the plurality of sub-flow paths while concentrated water discharged from each of the plurality of electrodeionization devices flows through each of the plurality of sub-paths (Invention 5).

According to the invention (Invention 5), even when the flow rate of supply water to each electrodeionization device is varied in the electrodeionization system including the plurality of electrodeionization devices, the flow rate of concentrated water discharged from each electrodeionization device can be kept constant thereby to suppress the occurrence of scale. Moreover, even when each sub-flow path or each sub-path does not include a control valve, the flow rate of concentrated water can be kept constant using the control valves provided only in the main flow path for flowing the desalted water and the main path for flowing the concentrated water, and it is therefore possible to reduce the operation cost of the electrodeionization system.

In the above invention (Invention 5), the supply water flow rate varying step may include increasing or decreasing the flow rate of supply water within a range of 30% to 100% (Invention 6).

### [Advantageous Effect of the Invention]

According to the present invention, it is possible to provide an electrodeionization system that reduces the production cost while suppressing the occurrence of scale due to a decrease in the flow rate of supply water to each electrodeionization device.

### [Brief Description of Drawings]

FIG. 1 is a flow diagram illustrating an ultrapure water production apparatus to which an electrodeionization system according to the present invention can be applied.
FIG. 2 is a schematic diagram illustrating the electrodeionization system according to the present invention.
FIG. 3 is a schematic diagram illustrating the control structure of a testing device used in the verification experiment.
FIG. 4 is a graph illustrating changes in the flow rates (amounts of water) of desalted water and concentrated water with respect to changes in the flow rate of supply water in the verification experiment.
FIG. 5 is a graph illustrating changes in the pressure losses of desalted water and concentrated water with respect to changes in the flow rate of supply water in the verification experiment.

### [Embodiments for Carrying out the Invention]

Hereinafter, the electrodeionization system of the present invention will be described with reference to the accompanying drawings. For descriptive purposes, the description will be made partially using a diagram in which the electrodeionization system is provided in an ultrapure water production apparatus, but the electrodeionization system and the control method for the electrodeionization device in the present invention can be used not only in the ultrapure water production apparatus but also in various fields such as those for pharmaceuticals and foods.

### (Electrodeionization System)

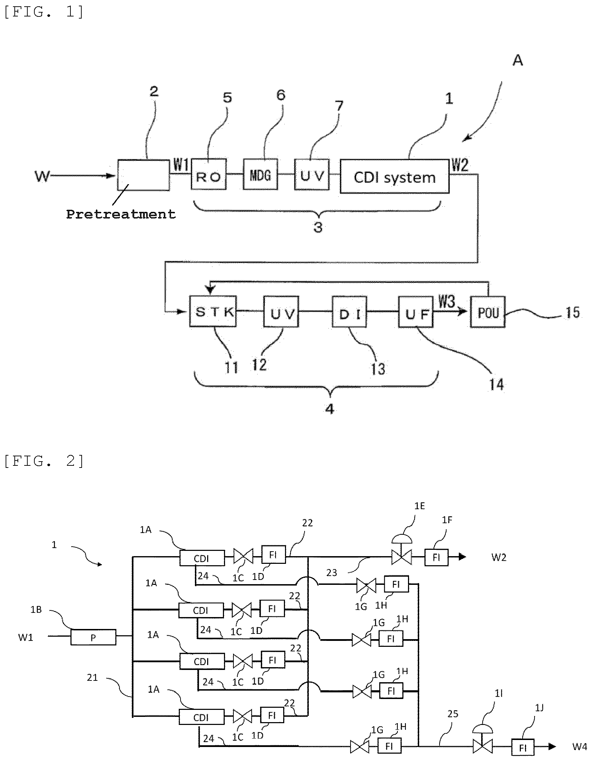

FIG. 1 is a diagram illustrating an ultrapure water production apparatus A that can implement an electrodeionization system 1 according to an embodiment of the present invention. As illustrated in FIG. 1, the ultrapure water production apparatus A may be composed of three-stage devices of a pretreatment device 2, a primary pure water production device 3, and a secondary pure water production device (subsystem) 4. The primary pure water production device 3 includes the electrodeionization system 1 (denoted as CDI system in FIG. 1). In the pretreatment device 2 of such an ultrapure water production apparatus A, the pretreatment may be performed, such as by filtration of raw water W, coagulation sedimentation, and microfiltration, to primarily remove suspended solids.

The primary pure water production device 3 may have a reverse osmosis membrane device 5 that processes pretreated water (also referred to as supply water) W1, a degassing membrane device 6, an ultraviolet oxidation device 7, and the electrodeionization system 1. The primary pure water production device 3 may remove most of the electrolytes, fine particles, viable bacteria, etc. in the pretreated water W1 and decompose organic substances.

The subsystem 4 may be composed of a sub-tank 11 that serves as a water storage tank arranged downstream the above electrodeionization system 1 and stores primary pure water (desalted water) W2 produced in the primary pure water production device 3, an ultraviolet oxidation device 12 that processes the primary pure water W2 supplied from the sub-tank 11 via a pump (not illustrated), a non-regenerative mixed bed type ion exchange device 13, and an ultrafiltration (UF) membrane 14 as a membrane filtration device. In some cases, an RO membrane separator or the like may be further provided as required. In this subsystem 4, a small amount of organic substances (TOC components) contained in the primary pure water W2 may be oxidized and decomposed by the ultraviolet oxidation device 12 and subsequently processed in the non-regenerative mixed bed type ion exchange device 13, in which residual carbonated ions, organic acids, anionic substances, metal ions, and cationic substances are removed by ion exchange. Then, the ultrafiltration (UF) membrane 14 may remove fine particles to obtain ultrapure water W3, and this may be supplied to a point of use 15. Unused ultrapure water may be flowed back to the sub-tank 11.

The electrodeionization system 1 according to an embodiment of the present invention will be described with reference to FIG. 2. As illustrated in FIG. 2, the electrodeionization system 1 according to an embodiment of the present invention includes a plurality of electrodeionization devices 1A installed in parallel.

In the electrodeionization system 1, first, the supply water W1 having an arbitrary flow rate is supplied to each electrodeionization device 1A through a flow path 21 by a pump 1B for water supply capable of varying the flow rate of supply water to the electrodeionization devices 1A. The supply water W1 supplied to each electrodeionization device 1A is processed in it into the desalted water (primary pure water) W2 and concentrated water W4.

The desalted water W2 produced in each electrodeionization device 1A passes through a sub-flow path 22 and joins in a main flow path 23. The sub-flow path 22 is provided with a manual valve 1C and a flowmeter 1D, and the main flow path 23 is provided with a first control valve 1E and a flowmeter 1F. On the other hand, the concentrated water W4 discharged from each electrodeionization device 1A passes through a sub-path 24 and then joins in a main path 25. Each sub-path 24 is provided with a manual valve 1G and a flowmeter 1H, and the main path 25 is provided with a second control valve 1I and a flowmeter 1J.

In addition, the electrodeionization system 1 includes a control device (not illustrated) that can control the first control valve 1E, which is provided in the main flow path 23, and the second control valve 1I, which is provided in the main path 25, in response to changes in the flow rate of supply water W1 from the pump 1B.

The supply water flow rate varying means, which corresponds to the pump 1B in FIG. 2, is a means for varying the flow rate of supply water W1 to the plurality of electrodeionization devices 1A. The supply water flow rate varying means to be adopted may be one that varies the flow rate of supply water W1 within a range of 30% to 100%, assuming that the flow rate of supply water W1 before variation is 100%. Here, the flow rate of supply water W1 before variation refers to a flow rate whose maximum value is the sum of the maximum water flow rates listed in the catalogs of respective electrodeionization devices 1A. When the variation in the flow rate of supply water W1 falls within the above range, as will be described later in the verification experiment, the flow rate of desalted water W2 produced in each electrodeionization device 1A and the flow rate of concentrated water W4 discharged from each electrodeionization device 1A vary approximately in proportion to the variation in the flow rate of supply water W1, and therefore the flow rate of concentrated water W4 can more readily kept constant.

In FIG. 2, the pump 1B is illustrated as an example of the supply water flow rate varying means, but the supply water flow rate varying means is not limited to the pump 1B, provided that it can vary the flow rate of supply water W1 to the electrodeionization devices 1A. For example, a water feed pump or a high-pressure pump (both not illustrated) for supplying water to the RO (reverse osmosis membrane device) 5 in FIG. 1 can also be used.

The concentrated water flow rate adjusting means, which corresponds to the manual valve 1G in FIG. 2, is a means for adjusting the flow rate of concentrated water W4 discharged from each electrodeionization device 1A. The concentrated water flow rate adjusting means is installed in each sub-path 24 through which the concentrated water W4 discharged from each electrodeionization device 1A flows. At the time of starting up the electrodeionization system 1 or at the initial stage of operation, the flow rate of concentrated water W4 discharged from each electrodeionization device 1A may be adjusted to a predetermined value using the concentrated water flow rate adjusting means, and the flow rates of desalted water W2 and concentrated water W4 may be adjusted using the concentrated water flow rate maintaining means, which will be described later, so that even when the flow rate of supply water W1 is varied, the flow rate of concentrated water W4 can be maintained at a constant value.

In FIG. 2, the manual valve 1G is illustrated as an example of the concentrated water flow rate adjusting means, but the concentrated water flow rate adjusting means is not limited, provided that it can adjust the flow rate of concentrated water W4 discharged from each electrodeionization device 1A. For example, a constant flow rate valve can also be used.

The concentrated water flow rate maintaining means, which corresponds to the first control valve 1E provided in the main flow path 23 and the second control valve 1I provided in the main path 25 in FIG. 2, is a means for maintaining the flow rate of concentrated water W4 discharged from each electrodeionization device 1A at a certain level or higher. As illustrated in FIG. 2, the concentrated water flow rate maintaining means is installed only in the main flow path 23 in which the plurality of sub-flow paths 22 are integrated and the main path 25 in which the plurality of sub-paths 24 are integrated. The desalted water W2 produced in each of the plurality of electrodeionization devices 1A flows through each of the plurality of sub-flow paths 22 while the concentrated water W4 discharged from each of the plurality of electrodeionization devices 1A flows through each of the plurality of sub-paths 24.

In the concentrated water flow rate maintaining means, the first control valve 1E provided in the main flow path 23 and the second control valve 1I provided in the main path 25 may be controlled, for example, in response to changes in the flow rate of supply water W1 from the pump 1B, and it is thereby possible to control the flow rates of the desalted water W2 and concentrated water W4 from the electrodeionization devices 1A. That is, when the flow rate of supply water W1 decreases, the flow rate of concentrated water W4 can be controlled at a certain level or higher by decreasing the flow rate of desalted water W2.

By the concentrated water flow rate maintaining means and the aforementioned concentrated water flow rate adjusting means, the flow rate of concentrated water W4 discharged from each of the plurality of electrodeionization devices 1A can be maintained at a constant value for each electrodeionization device 1A, and the occurrence of scale can therefore be suppressed. Moreover, by providing the concentrated water flow rate maintaining means only in the main flow path 23 and the main path 25, the number of concentrated water flow rate maintaining means installed can be reduced as compared to a case in which the concentrated water flow rate maintaining means is provided in each of the plurality of sub-flow paths 22 or the plurality of sub-paths 24, and it is therefore possible to suppress the production cost of the electrodeionization system 1.

In FIG. 2, the first control valve 1E and the second control valve 1I are illustrated as an example of the concentrated water flow rate maintaining means, but the concentrated water flow rate maintaining means is not limited, provided that it can maintain the flow rate of concentrated water W4 at a certain level or higher. For example, a constant flow rate valve provided in the main path 25 can also be used.

### (Control Method for Electrodeionization System)

A control method for the electrodeionization system 1 of the present embodiment will now be described below.

The control method for the electrodeionization system 1 according to an embodiment of the present invention is that for the electrodeionization system 1 including the plurality of electrodeionization devices 1A installed in parallel, and includes a supply water flow rate varying step, a concentrated water flow rate adjusting step, and a concentrated water flow rate maintaining step. Each step will be described below with reference to FIG. 2.

The supply water flow rate varying step in an embodiment of the control method for the electrodeionization system 1 is a step in which the flow rate of supply water to each electrodeionization device 1A is varied to an arbitrary amount by the pump 1B for water supply. The concentrated water flow rate adjusting step is a step in which the flow rate of concentrated water W4 discharged from each electrodeionization device 1A is adjusted to a predetermined value for each electrodeionization device 1A using the manual valve 1G provided in each sub-path 24.

The concentrated water flow rate maintaining step is a step in which the flow rate of concentrated water W4 discharged from each of the plurality of electrodeionization devices 1A is maintained at a certain level or higher using the first control valve 1E and the second control valve 1I. The first control valve 1E is provided only in the main flow path 23 in which the plurality of sub-flow paths 22 are integrated while the second control valve 1I is provided only in the main path 25 in which the plurality of sub-paths 24 are integrated. The desalted water W2 produced in each of the plurality of electrodeionization devices 1A flows through each of the plurality of sub-flow paths 22 while the concentrated water W4 discharged from each of the plurality of electrodeionization devices 1A flows through each of the plurality of sub-paths 24. An example of the concentrated water flow rate maintaining step may include reducing the flow rate of desalted water W2 using the first control valve 1E when the flow rate of supply water W1 decreases, and the flow rate of concentrated water W4 can thereby be controlled at a certain level or higher.

The control method for the electrodeionization system 1 includes the concentrated water flow rate adjusting step and the concentrated water flow rate maintaining step thereby to allow the flow rate of concentrated water W4 to be maintained at a certain level even when the flow rate of supply water is varied in the supply water flow rate varying step, and the occurrence of scale can be suppressed. Moreover, the concentrated water flow rate maintaining step is carried out using control valves provided only in the main flow path 23 and the main path 25, rather than using control values provided in each sub-flow path 22 and each sub-path 24, and the operating cost of the electrodeionization system 1 can thereby be reduced.

The supply water flow rate varying step may include varying the flow rate of supply water within a range of 30% to 100%, assuming that the flow rate of supply water W1 before variation is 100%. When the flow rate of supply water falls within the above range, the concentrated water W4 discharged from each electrodeionization device 1A varies approximately in proportion to the change in the flow rate of supply water as described in the verification experiment, which will be described later, and the concentrated water W4 can therefore be kept constant. In the above-described supply water flow rate varying step, the pump 1B is used to vary the flow rate of supply water, but the present invention is not limited to this, and various pumps such as a high-pressure pump may also be used.

In the supply water flow rate varying step, the time from the start to end of the variation of the supply water flow rate (e.g., until the flow rate of supply water reaches 30% from 100%) may be preferably 1 minute to 30 minutes. When the varying time falls within the above range, the amount of concentrated water W4 discharged from each electrodeionization device 1A has a more sufficient proportional relationship with respect to changes in the flow rate of supply water, and the flow rate of concentrated water W4 can be kept more constant.

In the above-described supply water flow rate varying step, a method is described in which the manual valves 1G provided in the sub-paths 24 are used so that the flow rate of concentrated water W4 discharged from each electrodeionization device 1A becomes a predetermined value for each electrodeionization device 1A, but the present invention is not limited to this, and a method using a constant flow rate valve may also be used.

In the above-described concentrated water flow rate maintaining step, a method is used in which the flow rate of concentrated water W4 is maintained at a certain level or higher using the first control valve 1E and the second control valve 1I. The first control valve 1E is provided in the main flow path 23 in which the sub-flow paths 22 are integrated while the second control valve 1I is provided in the main path 25 in which the sub-paths 24 are integrated. The desalted water W2 flows through the sub-flow paths 22 while the concentrated water W4 flows through the sub-paths 24. However, the present invention is not limited to this, and a method using a constant flow rate valve provided in the main path 25 may also be used.

### (Verification Experiment)

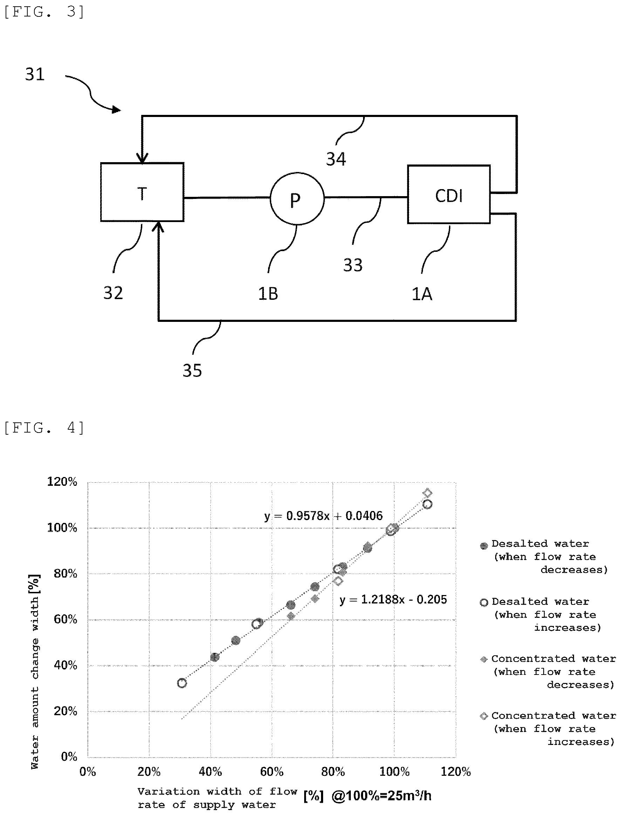

A verification experiment was conducted to confirm the effects of the present invention using a testing device 31 for controlling an electrodeionization device 1A illustrated in FIG. 3. This testing device 31 includes a supply water tank 32, a supply water flow path 33, a pump 1B, a desalted water (primary pure water) flow path 34, and a concentrated water flow path 35 in addition to the electrodeionization device 1A. The desalted water W2 produced in the electrodeionization device 1A and the concentrated water W4 discharged from the electrodeionization device 1A pass through the desalted water flow path 34 and the concentrated water flow path 35, respectively, and flow into the supply water tank 32 again. The electrodeionization device 1A used is one employing a counter flow scheme, and the desalted water flow path 34 and the concentrated water flow path 35 are each provided with a flowmeter and a pressure gauge (both not illustrated).

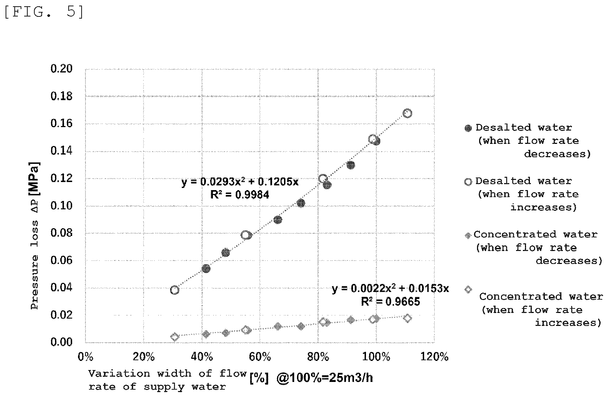

In the testing device 31, the pump 1B was used to reduce the flow rate of supply water to the electrodeionization device 1A from 100% to 30% in 20 minutes, assuming that the flow rate of supply water W1 before reduction was 100%, and changes in the flow rate and pressure loss of the primary pure water W2 and concentrated water W4 were measured with respect to the changes in the flow rate of supply water at that time. Then, the flow rate of supply water to the electrodeionization device 1A was returned from 30% to 100% in 20 minutes, and changes in the flow rate and pressure loss of the primary pure water W2 and concentrated water W4 were measured with respect to the changes in the flow rate of supply water at that time. The results of repeating this operation twice are illustrated in FIGS. 4 and 5. The flowmeter and pressure gauge provided in each of the desalted water flow path 34 and the concentrated water flow path 35 were used for the measurement.

As illustrated in FIGS. 4 and 5, it has been confirmed that even when the flow rate of supply water W1 is varied between 100% and 30%, the flow rate and pressure of the primary pure water W2 and concentrated water W4 have an approximately proportional relationship with respect to the changes in the flow rate of supply water W1. From these results, it is considered that even in the electrodeionization system 1 including a plurality of electrodeionization devices 1A as in the present invention, the flow rate of concentrated water W4 discharged from each electrodeionization device 1A can be controlled at a constant value only by the first control valve 1E provided in the main flow path 23 and the second control valve 1I provided in the main path 25, provided that the amount of concentrated water W4 discharged can be adjusted to a predetermined value for each electrodeionization device 1A.

The aforementioned embodiments are described to facilitate understanding of the present invention and are not described to limit the present invention. It is therefore intended that the elements disclosed in the above embodiments include all design changes and equivalents to fall within the technical scope of the present invention.

### [Description of Reference Numerals]

- A: Ultrapure water production apparatus
- 1: Electrodeionization system
- 1A: Electrodeionization device
- 1B: Pump
- 1C, 1G: Manual valve
- 1D, 1F, 1H, 1J: Flowmeter
- 1E: First control valve
- 1I: Second control valve
- 2: Pretreatment device
- 3: Primary pure water production device
- 4: Secondary pure water production device (subsystem)
- 5: Reverse osmosis membrane device
- 6: Degassing membrane device
- 7: Ultraviolet oxidation device
- 11: Sub-tank
- 12: Ultraviolet oxidation device
- 13: Non-regenerative mixed bed type ion exchange device
- 14: Ultrafiltration (UF) membrane
- 15: Point of use
- 21: Flow path for supply water
- 22: Sub-flow path for desalted water
- 23: Main flow path for desalted water
- 24: Sub-path for concentrated water
- 25: Main path for concentrated water
- 31: Testing device
- 32: Supply water tank
- 33: Supply water flow path
- 34: Desalted water (primary pure water) flow path
- 35: Concentrated water flow path
- W: Raw water
- W1: Pretreated water (supply water)
- W2: Primary pure water (desalted water)
- W3: Ultrapure water (secondary pure water)
- W4: Concentrated water

## Claims

1. An electrodeionization system comprising a plurality of electrodeionization devices installed in parallel, the electrodeionization system comprising:
a supply water flow rate varying means that varies a flow rate of supply water to the plurality of electrodeionization devices;
a concentrated water flow rate adjusting means that adjusts, for each electrodeionization device, a flow rate of concentrated water discharged from each of the plurality of electrodeionization devices; and
a concentrated water flow rate maintaining means that maintains the flow rate of the concentrated water discharged from each of the plurality of electrodeionization devices at a certain level or higher,
wherein the concentrated water flow rate maintaining means is installed only in a main flow path in which a plurality of sub-flow paths are integrated and a main path in which a plurality of sub-paths are integrated, wherein desalted water produced in each of the plurality of electrodeionization devices flows through each of the plurality of sub-flow paths while concentrated water discharged from each of the plurality of electrodeionization devices flows through each of the plurality of sub-paths.

2. The electrodeionization system according to claim 1, wherein the supply water flow rate varying means increases or decreases the flow rate of supply water within a range of 30% to 100%.

3. The electrodeionization system according to claim 1 or 2, wherein the concentrated water flow rate maintaining means includes a first control valve provided in the main flow path and a second control valve provided in the main path.

4. The electrodeionization system according to any one of claims 1 to 3, wherein the concentrated water flow rate adjusting means is a manual valve provided in each of the sub-paths.

5. A control method for an electrodeionization system comprising a plurality of electrodeionization devices installed in parallel, the control method comprising:
a supply water flow rate varying step of varying a flow rate of supply water to the plurality of electrodeionization devices;
a concentrated water flow rate adjusting step of adjusting, for each electrodeionization device, a flow rate of concentrated water discharged from each of the plurality of electrodeionization devices; and
a concentrated water flow rate maintaining step of maintaining the flow rate of the concentrated water discharged from each of the plurality of electrodeionization devices at a certain level or higher using a first control valve and a second control valve, wherein the first control valve is provided only in a main flow path in which a plurality of sub-flow paths are integrated while the second control valve is provided only in a main path in which a plurality of sub-paths are integrated, wherein desalted water produced in each of the plurality of electrodeionization devices flows through each of the plurality of sub-flow paths while concentrated water discharged from each of the plurality of electrodeionization devices flows through each of the plurality of sub-paths.

6. The control method for an electrodeionization system according to claim 5, wherein the supply water flow rate varying step includes increasing or decreasing the flow rate of supply water within a range of 30% to 100%.
